# EUROPÄISCHE PATENTSCHRIFT

(11) **EP 3 473 512 B1**
(45) Veröffentlichungstag und Bekanntmachung des Hinweises auf die Patenterteilung: **17.08.2022**
(21) Anmeldenummer: 18199771.9
(22) Anmeldetag: 11.10.2018
(51) Int. Cl.: G06F 11/07, B60W 50/029

(54) **FUNKTIONSMODUL, STEUEREINHEIT FÜR EIN BETRIEBSASSISTENZSYSTEM UND ARBEITSVORRICHTUNG**
FUNCTIONAL MODULE, CONTROL UNIT FOR AN OPERATING ASSISTING SYSTEM AND WORKING DEVICE
MODULE FONCTIONNEL, UNITÉ DE COMMANDE POUR UN SYSTÈME D'AIDE AU FONCTIONNEMENT ET DISPOSITIF DE TRAVAIL

(30) Priorität: 19.10.2017 DE 102017218643
(43) Veröffentlichungstag der Anmeldung: 24.04.2019
(73) Patentinhaber: VOLKSWAGEN AKTIENGESELLSCHAFT, 38440 Wolfsburg (DE)
(72) Erfinder: Dobberphul, Timo, 38102 Braunschweig (DE); Davids, Reno, 38102 Braunschweig (DE)

(56) Entgegenhaltungen:
- EP-A2- 1 219 489
- WO-A1-2016/162624
- DE-A1-102014 212 384
- DE-A1-102014 220 781

## Beschreibung

Die vorliegende Erfindung betrifft ein Funktionsmodul zur Steuerung einer Funktion eines Aggregats, eine Steuereinheit für ein Betriebsassistenzsystem einer Arbeitsvorrichtung sowie eine Arbeitsvorrichtung als solche. Die vorliegende Erfindung betrifft insbesondere ein Funktionsmodul für ein Fahrassistenzsystem eines - vorzugsweise autonom fahrenden - Fahrzeugs, eine Steuereinheit für ein Fahrassistenzsystem eines - vorzugsweise autonom fahrenden - Fahrzeugs, sowie ein Fahrzeug als solches, welches insbesondere zum autonomen Fahren ausgebildet ist.

Zunehmend kommen Betriebsassistenzsysteme für Arbeitsvorrichtungen und insbesondere Fahrassistenzsysteme für Fahrzeuge, zumal wenn diese zum autonomen Fahren ausgebildet sind, kommen verstärkt zum Einsatz. Da derartige Betriebsassistenzsysteme und insbesondere Fahrassistenzsysteme in den Betrieb einer Arbeitsvorrichtung insbesondere eines Fahrzeugs direkt eingreifen, müssen die entsprechenden Systemkomponenten auch in einem Fehlerfall in einem sicheren Modus und mit einem Mindestmaß an Funktionen betreibbar bleiben.

Um derartige fail-safe- und fail-functional-Eigenschaften zumindest teilweise aufrechterhalten zu können, ist herkömmlicherweise ein vergleichsweise hoher algorithmischer, verfahrenstechnischer und/oder schaltungstechnischer Aufwand erforderlich. Dennoch können die erforderlichen fail-safe- und fail-functional-Eigenschaften nicht unter allen Umständen und nicht in einem beliebigen Umfang gewährleistet werden.

DE 10 2011 086530 A1 betrifft ein Mikroprozessorsystem mit fehlertoleranter Architektur, welches zur Ausführung von zumindest teilweise sicherheitskritischen Softwaremodulen im Rahmen einer Steuerung von Softwaremodulen zugeordneten Funktionen ausgebildet ist.

DE 10 2012 024818 A1 beschreibt ein Verfahren zur Verbesserung der funktionalen Sicherheit und Steigerung der Verfügbarkeit eines elektronischen Regelungssystems sowie ein elektronisches Regelungssystem als solches.

DE 10 2015 211451 A1 offenbart ein Verfahren für den Manipulationsschutz von über ein Bussystem zwischen Systemkomponenten zu übertragenden Nutzdatenpaketen.

DE 10 2014 212384 A1 offenbart ein Funktionsmodul für ein Fahrassistenzsystem eines Fahrzeugs, zur Steuerung einer Funktion eines Aggregats des Fahrzeugs, mit:
- einer Hauptfunktionseinheit, welche eingerichtet ist, einen Funktionsparametersatz mit mindestens einem Funktionsparameter für eine Steuerung der Funktion des Aggregats zu erzeugen und bereitzustellen, und
- einer Prüf- und Hilfsfunktionseinheit, welche eingerichtet ist,
   (i) den Funktionsparametersatz der Hauptfunktionseinheit zu prüfen und
   (ii) in Abhängigkeit von einem Ergebnis des Prüfens in einem Hilfsbetriebsmodus einen Hilfsparametersatz mit mindestens einem Hilfsparameter zu erzeugen und zur Steuerung der Funktion des Aggregats auszugeben.

Der vorliegenden Erfindung liegt die Aufgabe zu Grunde, ein Funktionsmodul, eine Steuereinheit für ein Betriebsassistenzsystem sowie eine Arbeitsvorrichtung als solche anzugeben, bei welchen mit besonders einfachen Mitteln und dennoch in zuverlässiger Weise fail-safe- und fail-functional-Eigenschaften bedingungslos garantiert werden können.

Die der Erfindung zu Grunde liegende Aufgabe wird bei einem Funktionsmodul mit den Merkmalen des unabhängigen Patentanspruchs 1, bei einer Steuereinheit für ein Betriebsassistenzsystem einer Arbeitsvorrichtung erfindungsgemäß mit den Merkmalen des

Patentanspruchs 9 sowie bei einer Vorrichtung erfindungsgemäß mit den Merkmalen des Anspruchs 10 gelöst. Vorteilhafte Weiterbildungen sind Gegenstand der jeweiligen abhängigen Ansprüche.

Gemäß einem ersten Aspekt der vorliegenden Erfindung wird ein Funktionsmodul geschaffen, insbesondere für ein Betriebsassistenzsystem einer Arbeitsvorrichtung oder für ein Fahrassistenzsystem eines - vorzugsweise autonom fahrenden - Fahrzeugs, welches zur Steuerung einer Funktion eines Aggregats der Arbeitsvorrichtung bzw. des Fahrzeugs eingerichtet ist. Ferner ist das Funktionsmodul (a) mit einer Hauptfunktionseinheit ausgebildet, welche eingerichtet ist, einen Funktionsparametersatz mit mindestens einem Funktionsparameter für eine Steuerung der Funktion des Aggregats zu erzeugen und bereitzustellen, sowie (b) mit einer Prüf- und Hilfsfunktionseinheit. Die Prüf- und Hilfsfunktionseinheit ist eingerichtet, (i) den Funktionsparametersatz der Hauptfunktionseinheit aufzunehmen und zu prüfen und (ii) in Abhängigkeit von einem Ergebnis des Prüfens in einem Normalbetriebsmodus den von der Hauptfunktionseinheit aufgenommenen

Funktionsparametersatz der Hauptfunktionseinheit zur Steuerung der Funktion des Aggregats auszugeben und in einem Hilfsbetriebsmodus einen Hilfsparametersatz mit mindestens einem Hilfsparameter zu erzeugen und zur Steuerung der Funktion des Aggregats auszugeben. Mit den erfindungsgemäß vorgesehenen Maßnahmen wird also eine Überprüfung der Hauptfunktionseinheit ermöglicht, und zwar unter Vermeidung eines Betriebsabbruchs, nämlich durch Einsatz der Prüf- und Hilfsfunktionseinheit, die beim Verlassen des Normalbetriebsmodus im Rahmen eines Hilfsbetriebsmodus zum Aufrechterhalten der Funktion des zu Grunde liegenden Aggregats einen Hilfsparametersatz erzeugt und zur Steuerung der Funktion des Aggregats ausgibt.

Besonders vorteilhaft gestalten sich Aufbau und Funktion des erfindungsgemäßen Funktionsmoduls dann, wenn gemäß einer bevorzugten Ausgestaltungsform die Hauptfunktionseinheit eine höhere algorithmische und/oder schaltungstechnische Steuer- und Funktionskomplexität aufweist als die Prüf- und Hilfsfunktionseinheit.

Insbesondere können die Hauptfunktionseinheit für höchsten Komfort und zur Befriedigung aller an die Funktion gestellten Anforderungen und die Prüf- und Hilfsfunktionseinheit einfacher und nicht für denselben Komfort eingerichtet sein, wobei letztere nicht alle Anforderungen an die Funktion einhält, sondern nur noch die notwendigsten zur Aufrechterhaltung der sicheren Steuerung der Funktion des Aggregats der Arbeitsvorrichtung bzw. des Fahrzeugs.

Der Begriff der höheren Funktionskomplexität kann im Zusammenhang gesehen werden mit einer größeren Anzahl von Eingaben oder Inputs, einer größeren Anzahl von Parametern zur Berechnung, einer größeren Varianz der Parameter, nicht einfacher mathematischer Zuordnungen und/oder unterschiedlicher Zuordnungen, insbesondere abhängig von Zuständen.

Im Hinblick auf Sicherheitsaspekte ist es ferner von besonderem Vorteil, wenn zusätzlich oder alternativ die Hauptfunktionseinheit hinsichtlich Funktions- und/oder Betriebssicherheit gemäß einem QM-Niveau des ISO-26262-Standards ausgebildet ist.

Des Weiteren kann es in diesem Zusammenhang gemäß einer anderen Weiterbildung des erfindungsgemäßen Funktionsmoduls vorgesehen sein, dass die Prüf- und Hilfsfunktionseinheit hinsichtlich Funktions- und/oder Betriebssicherheit gemäß einem ASIL-D-Niveau des ISO-26262-Standards ausgebildet ist.

Insgesamt gesehen ergibt sich also eine Struktur für ein Funktionsmodul, welche eine insgesamt vergleichsweise komplexe Funktion auf einem ASIL-D-Niveau zu realisieren vermag, wobei in einem Fehlerfall eine Hilfsfunktion auf einem höheren Sicherheitsniveau der ASIL-D-Stufe bereitgestellt wird und die komplexer ausgestaltete Hauptfunktionseinheit mit QM-Niveau ablösend ergänzt, so dass mit dem erfindungsgemäßen Funktionsmodul insgesamt auch komplexe Funktionen mit fail-safe-Eigenschaft und/oder mit fail-functional-Eigenschaft gewährleistet werden können.

Um eine möglichst nahe Kopplung an eine konkrete Betriebssituationen einer zu Grunde liegenden Arbeitsvorrichtung gewährleisten zu können, ist es bei einer anderen Ausgestaltungsform des erfindungsgemäßen Funktionsmoduls vorgesehen, dass die Hauptfunktionseinheit und/oder die Prüf- und Hilfsfunktionseinheit dazu eingerichtet sind, einen für den Status und/oder den Betrieb der zu Grunde liegenden Arbeitsvorrichtung bzw. des zu Grunde liegenden Fahrzeugs und insbesondere eines jeweiligen Aggregats repräsentativen und insbesondere identischen Eingangsparametersatz mit mindestens einem Eingangsparameter zu empfangen und dem Erzeugen des Funktionsparametersatzes bzw. des Hilfsparametersatzes zu Grunde zu legen.

Die Hilfsfunktion kann auch einen kleineren Eingangsparametersatz aufweisen.

Grundsätzlich bestehen unterschiedliche Möglichkeiten, das korrekte Funktionieren der Hauptfunktionseinheit zu überprüfen.

Immer dann, wenn sich eine korrekte Funktion der Hauptfunktionseinheit als Resultat des Prüfergebnisses ergibt, arbeitet die Prüf- und Hilfsfunktionseinheit im Normalbetriebsmodus, wobei in diesem Modus der Funktionsparametersatz der Hauptfunktionseinheit insbesondere unverändert ausgegeben und somit quasi durchgereicht wird.

Ergibt sich als Resultat des Prüfergebnisses durch die Prüf- und Hilfsfunktionseinheit eine nicht korrekte Funktionsweise der Hauptfunktionseinheit, so wird in den Hilfsbetriebsmodus gewechselt, in welchem zum Beispiel in der Prüf- und Hilfsfunktionseinheit unter Berücksichtigung sämtlicher Umstände des Status und Betriebs und zum Beispiel auch des zu Grunde liegenden Aggregats oder auch weiterer Einheiten, zum Beispiel auch des Funktionsmoduls und damit verbundener Sensoren selbst, Hilfsparameter erzeugt und zur Steuerung der Funktion des Aggregats ausgegeben werden.

Bei einer Ausgestaltungsform des erfindungsgemäßen Funktionsmoduls ist die Prüf- und Hilfsfunktionseinheit dazu eingerichtet, durch die Hauptfunktionseinheit erzeugte und bereitgestellte und durch die Prüf- und Hilfsfunktionseinheit von der Hauptfunktionseinheit aufgenommene Funktionsparameter in Bezug auf den Status und/oder auf den Betrieb der zu Grunde liegenden Arbeitsvorrichtung bzw. des zu Grunde liegenden Fahrzeugs und insbesondere eines jeweiligen Aggregats auf Plausibilität zu prüfen.

Dabei ist es von besonderem Vorteil, wenn die Prüf- und Hilfsfunktionseinheit dazu eingerichtet ist, bei vorliegender Plausibilität im Normalbetriebsmodus und bei fehlender Plausibilität im Hilfsbetriebsmodus zu operieren.

Grundsätzlich können im Hilfsbetriebsmodus bestimmte oder sämtliche von der Hauptfunktionseinheit erzeugte und bereitgestellte Funktionsparameter zum sicheren Aufrechterhalten des Betriebs modifiziert werden, wobei je nach Anwendung auch bestimmte Parameterwerte ausgezeichnet sein können.

So ist es bei einer anderen vorteilhaften Weiterbildung des erfindungsgemäßen Funktionsmoduls vorgesehen, dass die Prüf- und Hilfsfunktionseinheit eingerichtet ist, im Hilfsbetriebsmodus einen durch die Hauptfunktionseinheit erzeugten und bereitgestellten und durch die Prüf- und Hilfsfunktionseinheit von der Hauptfunktionseinheit aufgenommenen Funktionsparameter auf einen Wert null, auf einen status- und/oder betriebsabhängigen saturierten und insbesondere Minimalwert, auf einen status- und/oder betriebsabhängigen saturierten und insbesondere Maximalwert und/oder auf einen mit geringerer Komplexität als in der Hauptfunktionseinheit zu bestimmenden status- und/oder betriebsabhängigen Sollwert zu setzen und als Hilfsparameter auszugeben.

Grundsätzlich sind für eine jeweilige Anwendung geeignete Ausgestaltungsformen des Funktionsmoduls in Gänze denkbar und sie sind nicht an eine bestimmte physikalische Struktur gebunden.

So kann gemäß bevorzugter Ausgestaltungsformen des erfindungsgemäßen Funktionsmoduls dieses ganz oder - insbesondere hinsichtlich der Hauptfunktionseinheit und/oder der Prüf- und Hilfsfunktionseinheit - teilweise als Softwarekomponente und/oder als anwendungsspezifische integrierte Schaltung, also als ASIC ausgebildet sein.

Auch sind sämtliche Mischformen denkbar, bei welchen bestimmte Komponenten hardwaremäßig realisiert werden, andere dagegen als Softwarerealisierung vorliegen.

Gemäß einem anderen Aspekt der vorliegenden Erfindung wird auch eine Steuereinheit für ein Betriebsassistenzsystem einer Arbeitsvorrichtung und insbesondere für ein Fahrassistenzsystem eines - vorzugsweise autonom fahrenden - Fahrzeugs geschaffen. Dieses ist mit mindestens einem erfindungsgemäß ausgestalteten Funktionsmodul zur Steuerung einer Funktion eines Aggregats der Arbeitsvorrichtung bzw. des Fahrzeugs ausgebildet.

Ferner ist Gegenstand der vorliegenden Erfindung auch eine Arbeitsvorrichtung als solche und insbesondere ein autonom fahrendes Fahrzeug, welches ausgebildet sind mit mindestens einem Aggregat zum Betrieb der Arbeitsvorrichtung bzw. des Fahrzeugs und mit einer Steuereinheit, welche erfindungsgemäß und zur Steuerung des mindestens einen Aggregats, insbesondere als Teil eines Betriebsassistenzsystems und/oder eines Fahrassistenzsystems ausgebildet ist.

### Kurzbeschreibung der Figuren

Weitere Einzelheiten, Merkmale und Vorteile der Erfindung ergeben sich aus der nachfolgenden Beschreibung und den Figuren.
- Figur 1 und 2: zeigen in schematischer Weise durch Blockdiagramme Ausführungsformen des erfindungsgemäßen Funktionsmoduls.
- Figur 3: zeigt ebenfalls nach Art eines schematischen Blockdiagramms eine Ausführungsform der erfindungsgemäßen Arbeitsvorrichtung und insbesondere des erfindungsgemäßen Fahrzeugs unter Verwendung von Ausführungsformen des erfindungsgemäßen Funktionsmoduls im Zusammenhang mit einem Betriebsassistenzsystem.

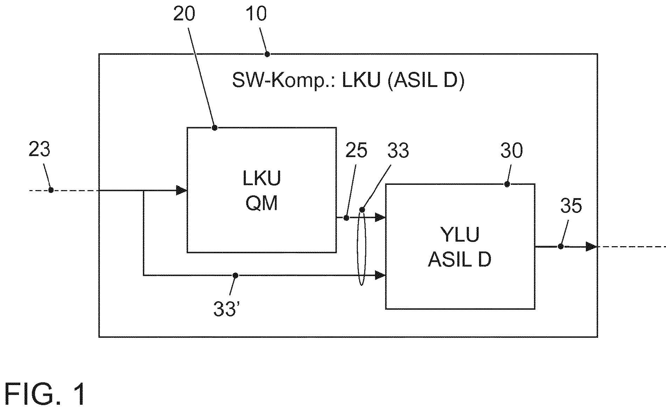

Nachfolgend werden unter Bezugnahme auf die Figuren 1 bis 3 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

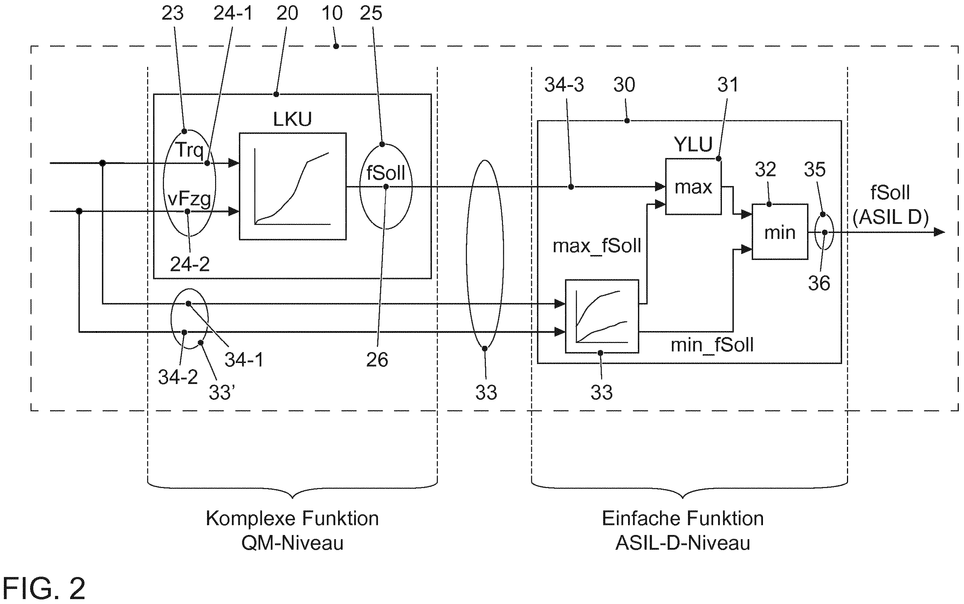

Figur 1 und 2 zeigen schematisch nach Art von Blockdiagrammen Ausführungsformen des erfindungsgemäßen Funktionsmoduls 10.

In der Ausführungsform gemäß den Figuren 1 und 2 besteht das erfindungsgemäße Funktionsmodul 10 aus einer Hauptfunktionseinheit 20 und einer Prüf- und Hilfsfunktionseinheit 30.

Das Funktionsmodul 10 nimmt über eine entsprechende Leitung oder eine Mehrzahl von Leitungen oder bei softwaremäßiger Realisierung über entsprechende Übergabeparameterlisten einen Eingangsparametersatz 23 mit einem oder mit mehreren Eingangsparametern 24-1, 24-2 auf, wobei die Eingangsparameter 24-1, 24-2 zum Beispiel repräsentativ sein können für einen Status und/oder einen Betrieb der zu Grunde liegenden Arbeitsvorrichtung 1 oder des Fahrzeugs 1 insgesamt oder eines Aggregats 2, 3, 4 der Arbeitsvorrichtung 1 oder des Fahrzeugs 1.

Auf der Grundlage des Eingangsparametersatzes 23 erzeugt die Hauptfunktionseinheit 20 einen Funktionsparametersatz 25 mit mindestens einem Funktionsparameter 26 und stellt diesen bereit.

Die erfindungsgemäß vorgesehene Prüf- und Hilfsfunktionseinheit 30 nimmt einerseits einen Eingangsparametersatz 33' auf, der mit dem Eingangsparametersatz 23 der Hauptfunktionseinheit 20 identisch ist. Zusätzlich wird der Prüf- und Hilfsfunktionseinheit 30 auch der Funktionsparametersatz 25 mit den Funktionsparameter 26 zugeführt, so dass der Eingangsparametersatz 33 der Prüf- und Hilfsfunktionseinheit 30 aus den Eingangsparametern 24-1, 24-2 für die Hauptfunktionseinheit 20, also den Status und den Betrieb beschreibenden Parametern, und den von der Hauptfunktionseinheit 20 erzeugten Funktionsparametern 26 besteht.

Auf der Grundlage sämtlicher der Prüf- und Hilfsfunktionseinheit 30 zugeführten Parameter wird geprüft, ob sich die Hauptfunktionseinheit 20 in einem normalen Betriebszustand befindet, nämlich zum Beispiel durch Überprüfung des Vorliegens oder Nichtvorliegens von Plausibilität der durch die Hauptfunktionseinheit 20 abgeleiteten Funktionsparameter 26 zum Steuern eines Aggregats 2, 3, 4.

Sind die von der Hauptfunktionseinheit 20 abgeleiteten Funktionsparameter 26 zum Steuern eines Aggregats 2, 3, 4 im Hinblick auf die den Status und/oder den Betrieb beschreibenden Eingangsparameter 24 plausibel, zum Beispiel weil sie sich in einem dem Status und/oder dem Betrieb entsprechenden Wertebereich oder in einer entsprechenden Wertemenge befinden, so wird die Prüf- und Hilfsfunktionseinheit 30 im Normalbetriebsmodus betrieben, in welchem die von der Hauptfunktionseinheit 20 abgeleiteten Funktionsparameter 26 zum Steuern eines Aggregats 2, 3, 4 ausgegeben werden.

Sind die von der Hauptfunktionseinheit 20 abgeleiteten Funktionsparameter 26 zum Steuern eines Aggregats 2, 3, 4 im Hinblick auf die den Status und/oder den Betrieb beschreibenden Eingangsparameter 24 jedoch nicht plausibel, zum Beispiel weil sie sich nicht in einem dem Status und/oder dem Betrieb entsprechenden Wertebereich oder in einer entsprechenden Wertemenge befinden, so wird die Prüf- und Hilfsfunktionseinheit 30 im Hilfsbetriebsmodus betrieben, in welchem die von der Hauptfunktionseinheit 20 abgeleiteten Funktionsparameter 26 zum Steuern eines Aggregats 2, 3, 4 nicht direkt ausgegeben werden, sondern höchstens in modifizierter Form, also in Form eines Hilfsparametersatzes 35, der mindestens einen Hilfsparameter 36 aufweist, welcher geeignet ist, die Funktion des jeweiligen Aggregats 2, 3, 4 auch im Fehlerfall sicherzustellen.

Bei dem in den Figuren 1 und 2 gezeigten Ausführungsbeispiel handelt es sich bei dem Funktionsmodul 10, welches als ASIC und/oder als Softwarekonstrukt ausgebildet sein kann, um eine so genannte Einheit zur Lenkkraftunterstützung, die auch als LKU bezeichnet wird.

Es wäre auch eine Ausführung als analoge oder digitale Schaltung denkbar. Die Darstellung im Hinblick auf eine Lenkkraftunterstützung LKU ist hier rein exemplarisch gewählt, wobei das erfindungsgemäße Konzept generell bei sämtlichen Funktionen einzeln oder in Kombination miteinander Anwendung finden kann.

Die Hauptfunktionseinheit 20 dient der Bestimmung eines Parameters als Funktionsparameter 26 zur Erzeugung der eigentlichen Lenkkraftunterstützung, und zwar auf einem Sicherheitsniveau QM im Sinne des ISO-26262-Standards. Dabei werden als Eingangsparameter 24-1 und 24-2 des Eingangsparametersatzes 23 zum Beispiel ein Wert des Fahrerhandmoments Trq und ein Wert der Fahrzeuggeschwindigkeit vFzg der Hauptfunktionseinheit 20 zugeführt. Es wird zum Beispiel in einer Bestimmungseinheit 21 ein Wert für eine Unterstützungskraft fSoll, die durch ein entsprechendes Aggregat 2, 3, 4 einer Lenkhilfe auf zu lenkende Räder aufgeprägt werden soll, erzeugt und bereitgestellt.

Der Wert der Unterstützungskraft fSoll wird hinsichtlich des Fahrerhandmoments Trq und hinsichtlich der Fahrzeuggeschwindigkeit vFzg auf Plausibilität geprüft, zum Beispiel unter Verwendung einer Berechnungseinheit 31-3 zum Bestimmen eines Minimalwerts min_fSoll und eines Maximalwerts max_fSoll für die Unterstützungskraft fSoll und unter Verwendung eines Maximalvergleichers 31-1 und eines Minimalvergleichers 31-2, so dass im Zusammenwirken der Einheiten 31-1 bis 31-3 ein saturierter Wert fSoll auf einem Sicherheitsniveau ASIL-D im ISO-26262-Standard erzeugt wird, und zwar unter Verwendung eines im Vergleich zu Hauptfunktionseinheit 20 vereinfachten und damit weniger komplexen Schemas des Bestimmens.

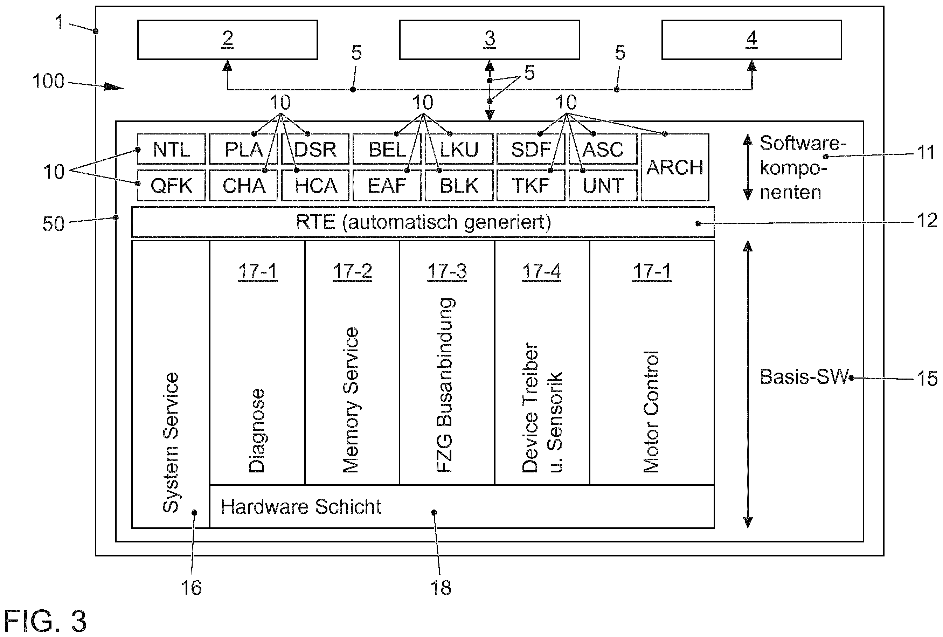

Figur 3 zeigt ebenfalls nach Art eines schematischen Blockdiagramms eine Ausführungsform der erfindungsgemäßen Arbeitsvorrichtung 1 und insbesondere des erfindungsgemäßen Fahrzeugs 1 unter Verwendung von Ausführungsformen des erfindungsgemäßen Funktionsmoduls 10 im Zusammenhang mit einem Betriebsassistenzsystem 100, zum Beispiel im Sinne eines Fahrassistenzsystems 100 eines Fahrzeugs 1.

Das erfindungsgemäße Fahrzeug 1 gemäß Figur 3 weist eine Mehrzahl von Aggregaten 2, 3, 4 auf, die über ein Leitungssystem oder einen Bus 5 mit einer erfindungsgemäß ausgestalteten Steuereinheit 50 wirkungsverbunden sind.

Die erfindungsgemäße Steuereinheit 50 gemäß Figur 3 weist eine Mehrzahl erfindungsgemäßer Funktionsmodule 10 auf, unter anderem auch ein Funktionsmodul 10 zur Lenkkraftunterstützung, welches mit LKU bezeichnet ist.

Sämtliche Funktionsmodule 10 bilden eine Schicht 11 eigensicherer Softwarekomponenten nach dem ASIL-D-Niveau des ISO-26262-Standards.

Hierarchisch unterhalb der Schicht 11 der Softwarekomponenten ist eine Schicht 12 für die Laufzeitumgebung (RTE) angefügt.

Daran schließt sich eine Schicht 15 mit Komponenten der Basissoftware an, zum Beispiel mit einem Systemservice 16, sowie Diensten 17-1, 17-2, 17-3, 17-4, 17-5 für die Diagnose, den Memoryservice, die Busanbindung im Fahrzeug, für Gerätetreiber und für die Sensorik bzw. für die Motorsteuerung.

### Hierarchisch nach unten erfolgt der Anschluss einer Hardwareschicht 18.

Im Zusammenhang mit der vorliegenden Erfindung ist auch der Aufbau als Software Architektur nach dem Autosar-Standard denkbar.

Diese und weitere Merkmale und Eigenschaften der vorliegenden Erfindung werden anhand der folgenden Darlegungen weiter erläutert:
Bei sicherheitsrelevanten Anwendungen und Steuereinheiten 50, die hochverfügbar sein müssen, etwa bei Steuergeräten 50 für autonom fahrende Fahrzeuge 1, darf es zum Beispiel keine Ausfälle durch Softwarefehler geben.

Da aber bekanntermaßen zum Beispiel keine beweisbar fehlerfreie Steuerarchitektur und insbesondere keine beweisbar fehlerfreie Software erstellt werden können, muss eine jeweilige Architektur so ausgelegt werden, dass sie fehlertolerant oder auch fail-functional ist, wobei letzteres bedeutet, dass eine durch eine Steuerarchitektur gesteuerte Betriebseinheit, zum Beispiel ein Aggregat oder dergleichen, auch in einem Fehlerfall noch mit einer Minimalfunktion betrieben werden kann.

Darüber hinaus besteht die Anforderung, dass die Steuereinheiten 50 und insbesondere Softwareeinheiten 10 oder SW-Units 10 von Steuereinheiten 50, möglichst modular und wiederverwendbar sein sollen, um die jeweiligen Steuereinheiten 50 und deren Architektur universell einzusetzen zu können und die integrierte Software SW wartbar zu halten.

Mit steigender Komplexität der Systeme werden diese Anforderungen schwieriger umsetzbar, da Wechselwirkungen der einzelnen Komponenten, komplexe Algorithmen oder frei parametrisierbare Strukturen nicht mehr vollständig testbar und nachvollziehbar sind.

Bisherige Software- oder SW-Architekturen für sicherheitsrelevante Systeme setzen entweder auf redundante Berechnung (Lockstepprinzip) oder auf Überwachungsfunktionen, die in einer zweiten Ebene die Berechnungsergebnisse der ersten Ebene kontrollieren.

Laufen die Ergebnisse einer Berechnung oder Steuerung im Lockstepbetrieb auseinander, bleibt nur die Deaktivierung des Systems übrig.

Genauso verhält es sich mit den Überwachungsfunktionen. Sie können nur für eine Deaktivierung der ersten Ebene sorgen, so dass zwar eine Architektur mit fail-safe-Eigenschaft aber keine Architektur mit fail-functional-Eigenschaft erreicht wird.

Es ist bekannt, die Möglichkeit einer Zwei-aus-drei-Entscheidung zu nutzen und eine derartige Entscheidung herbeizuführen, und zwar mit drei unterschiedlich programmierten Systemen oder mit Softwareeinheiten, die auf verschiedenen Prozessorkernen laufen.

Dies bringt einen hohen Aufwand in Software (SW) und/oder Hardware (HW) und erfordert häufig proprietäre Lösungen, da eine Kompatibilität zu bestehenden Standards fehlt.

Die Erfindung betrifft unter anderem auch eine Software- oder SW-Architektur und also den Aufbau entsprechender Softwarekomponenten zur Realisierung eines erfindungsgemäßen Funktionsmoduls 10, mit welcher die Entwicklung einer hochverfügbaren Software ermöglicht wird. Alle Module, aufgefasst als Funktionsmodule 10 im Sinne der vorliegenden Erfindung, sind zum Beispiel als eigenständige und eigensichere Softwarekomponenten angelegt und können modular zu einer Gesamtsoftware integriert werden.

Die Erfindung betrifft insbesondere auch den Aufbau der einzelnen SW-Module im Sinne eines erfindungsgemäßen Funktionsmoduls 10.

Jedes einzelne Modul 10 besitzt eine komplexe Funktion - nämlich realisiert durch eine Hauptfunktionseinheit 20 - zur Umsetzung aller Anforderungen, sowie zur Parametrierung der Komponenten und der Kommunikation mit anderen Modulen.

Für sicherheitsrelevante Systeme kann diese Funktion nach dem QM-Standard entwickelt sein, da ihre Ausgänge nicht mit Sicherheitsanforderungen behaftet sind. Darüber hinaus beherbergt jedes Modul im Sinne eines erfindungsgemäßen Funktionsmoduls 10 eine sicherheitsrelevante Funktion, nämlich realisiert durch eine Prüf- und Hilfsfunktionseinheit 30 im Sinne der vorliegenden Erfindung, durch welche die jeweiligen Sicherheitsanforderungen umgesetzt werden, insbesondere indem die Ausgänge der QM-Funktion und also insbesondere der Funktionsparametersatz 25 mit den Funktionsparametern 26 der Hauptfunktionseinheit 20
(i) überschrieben werden,
(ii) in bestimmte Grenzen oder Werteintervalle gesetzt oder gezwungen werden oder
(iii) auf null gesetzt werden.

Auf diese Weise ist die gesamte Komponente - also das gesamte Funktionsmodul 10 - eigensicher und garantiert sicherheitskonforme Ausgänge, nämlich insbesondere im Sinne eines ASIL-D-Niveaus des ISO-26262-Standards, obwohl komplexe Algorithmen berechnet werden können.

Wenn diese zum Beispiel als eigensichere Softwarekomponenten ausgelegten Funktionsmodule 10 jeweils als so genanntes Safety-Element-out-of-Context (SEooC) ausgelegt werden, ist eine Wiederverwendbarkeit in Folgeprojekten oder verschiedenen Varianten möglich.

Durch ihren Aufbau können Sicherheitsanforderungen losgelöst von einem Zielsystem getestet und validiert werden.

Unter anderem bestehen folgende maßgebliche Unterschiede, die beliebig mit einander kombiniert werden können, zum herkömmlichen Vorgehen:
- die Möglichkeit einer Aufteilung einer Applikationssoftware in Module im Sinne erfindungsgemäßer Funktionsmodule 10, insbesondere als Softwarekomponenten,
- die Möglichkeit einer Implementierung komplexer, parametrierbarer Funktionen bei gleichzeitiger Einhaltung von Sicherheitsanforderungen, speziell an die Verfügbarkeit,
- die Möglichkeit, dass in jedem Funktionsmodul 10 ein Überschreiben, ein Deaktivieren, ein Verändern der Ausgänge, nämlich des Funktionsparametersatzes einer QM-Funktion, aufgefasst als Hauptfunktionseinheit 20, durch eine nachgelagerte ASIL-D-Funktion, aufgefasst als Prüf- und Hilfsfunktionseinheit 30, zur Sicherstellung der Fehlertoleranz erfolgen, und
- die Möglichkeit einer Implementierung als SEooC-Einheit und damit die Möglichkeit einer universellen Verwendbarkeit unter Einhaltung von Sicherheitsanforderungen.

Weitere Vorteile des erfindungsgemäßen Vorgehens sind:
- die Möglichkeit eines modularen Aufbaus mit eigensicheren Funktionsmodulen 10 in der erfindungsgemäßen Struktur,
- die Möglichkeit einer Wiederverwendbarkeit der einzelnen Funktionsmodule 10,
- die Möglichkeit der Realisierung eines Konzepts mit Fehlertoleranz und/oder fail-functional-Eigenschaft,
- die Möglichkeit von Verifikation und Validierung der Komponenten außerhalb des Zielsystems, und zwar als eigenständige und eigensichere Komponenten,
- die Möglichkeit des Schaffens einer SW-Architektur für das autonome Fahren und
- die Möglichkeit einer kostengünstigen Umsetzung.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Fahrzeug, Arbeitsvorrichtung
- 2: Aggregat
- 3: Aggregat
- 4: Aggregat
- 5: Steuerbus
- 10: Funktionsmodul
- 11: Schicht der Softwarekomponenten
- 12: Schicht der Laufzeitumgebung (RTE)
- 15: Schicht der Basissoftware
- 16: Systemservice
- 17-1: Diagnose
- 17-2: Memoryservice
- 17-3: Fahrzeugbusanbindung
- 17-4: Gerätetreiber und Sensorik
- 17-5: Motorsteuerung
- 18: Hardwareschicht
- 20: Hauptfunktionseinheit
- 21: Bestimmungseinheit, Berechnungseinheit
- 23: Eingangsparametersatz
- 24-1: Eingangsparameter
- 24-2: Eingangsparameter
- 25: Funktionsparametersatz
- 26: Funktionsparameter
- 30: Prüf- und Hilfsfunktionseinheit
- 31-1: Maximalvergleicher
- 31-2: Minimalvergleicher
- 31-3: Berechnungseinheit
- 33': Eingangsparametersatz
- 33: (erweiterter) Eingangsparametersatz
- 34-1: Eingangsparameter
- 34-2: Eingangsparameter
- 34-3: Eingangsparameter
- 35: Hilfsparametersatz
- 36: Hilfsparameter
- 50: Steuereinheit
- 100: Betriebsassistenzsystem, Fahrassistenzsystem

## Patentansprüche

1. Funktionsmodul (10) für ein Betriebsassistenzsystem (100) einer Arbeitsvorrichtung (1) oder für ein Fahrassistenzsystem (100) eines Fahrzeugs (1), zur Steuerung einer Funktion eines Aggregats (2, 3, 4) der Arbeitsvorrichtung (1) bzw. des Fahrzeugs (1), mit:
- einer Hauptfunktionseinheit (20), welche eingerichtet ist, einen Funktionsparametersatz (25) mit mindestens einem Funktionsparameter (26) für eine Steuerung der Funktion des Aggregats (2, 3, 4) zu erzeugen und bereitzustellen, und
- einer Prüf- und Hilfsfunktionseinheit (30), welche eingerichtet ist,
(i) den Funktionsparametersatz (25) der Hauptfunktionseinheit (20) aufzunehmen und zu prüfen und
(ii) in Abhängigkeit von einem Ergebnis des Prüfens
- in einem Normalbetriebsmodus den von der Hauptfunktionseinheit (20) aufgenommenen Funktionsparametersatz (25) zur Steuerung der Funktion des Aggregats (2, 3, 4) auszugeben und
- in einem Hilfsbetriebsmodus einen Hilfsparametersatz (35) mit mindestens einem Hilfsparameter (36) zu erzeugen und zur Steuerung der Funktion des Aggregats (2, 3, 4) auszugeben.

2. Funktionsmodul (10) nach Anspruch 1, bei welchem die Hauptfunktionseinheit (20)
- eine höhere algorithmische und/oder schaltungstechnische Steuer- und Funktionskomplexität aufweist als die Prüf- und Hilfsfunktionseinheit (30) und/oder
- für höchsten Komfort und zur Befriedigung aller an die Funktion gestellten Anforderungen und die Prüf- und Hilfsfunktionseinheit (30) einfacher und nicht für denselben Komfort eingerichtet ist und nicht alle Anforderungen an die Funktion einhält, sondern nur noch die notwendigsten zur Aufrechterhaltung der sicheren Steuerung der Funktion des Aggregats (2, 3, 4) der Arbeitsvorrichtung (1) bzw. des Fahrzeugs (1).

3. Funktionsmodul (10) nach einem der vorangehenden Ansprüche, bei welchem die Hauptfunktionseinheit (20) hinsichtlich Funktions- und/oder Betriebssicherheit gemäß einem QM-Niveau des ISO-26262-Standards ausgebildet ist.

4. Funktionsmodul (10) nach einem der vorangehenden Ansprüche, bei welchem die Prüf- und Hilfsfunktionseinheit (30) hinsichtlich Funktions- und/oder Betriebssicherheit gemäß einem ASIL-D-Niveau des ISO-26262-Standards ausgebildet ist.

5. Funktionsmodul (10) nach einem der vorangehenden Ansprüche, bei welchem die Hauptfunktionseinheit (20) und/oder die Prüf- und Hilfsfunktionseinheit (30) eingerichtet sind, einen für den Status und/oder den Betrieb der zu Grunde liegenden Arbeitsvorrichtung (1) bzw. des zu Grunde liegenden Fahrzeugs (1) und insbesondere eines jeweiligen Aggregats (2, 3, 4) repräsentativen und insbesondere identischen Eingangsparametersatz (23, 33, 33') mit mindestens einem Eingangsparameter (24-1, 24-2; 34-1, 34-2) zu empfangen und dem Erzeugen des Funktionsparametersatzes (25) bzw. des Hilfsparametersatzes (35) zu Grunde zu legen.

6. Funktionsmodul (10) nach einem der vorangehenden Ansprüche, bei welchem die Prüf- und Hilfsfunktionseinheit (30) eingerichtet ist,
- von der Hauptfunktionseinheit (20) aufgenommene Funktionsparameter (26) in Bezug auf den Status und/oder auf den Betrieb der zu Grunde liegenden Arbeitsvorrichtung (1), des zu Grunde liegenden Fahrzeugs (1) und/oder eines jeweiligen Aggregats (2, 3, 4) auf Plausibilität zu prüfen und
- bei vorliegender Plausibilität im Normalbetriebsmodus und
- bei fehlender Plausibilität im Hilfsbetriebsmodus zu operieren.

7. Funktionsmodul (10) nach einem der vorangehenden Ansprüche, bei welchem die Prüf- und Hilfsfunktionseinheit (30) eingerichtet ist, im Hilfsbetriebsmodus einen von der Hauptfunktionseinheit (20) aufgenommenen Funktionsparameter (26)
- auf einen Wert null,
- auf einen status- und/oder betriebsabhängigen Minimalwert,
- auf einen status- und/oder betriebsabhängigen Maximalwert und/oder
- auf einen mit geringerer Komplexität als in der Hauptfunktionseinheit (20) zu bestimmenden status- und/oder betriebsabhängigen Sollwert
zu setzen und als Hilfsparameter (36) auszugeben.

8. Funktionsmodul (10) nach einem der vorangehenden Ansprüche, welches ganz oder hinsichtlich der Hauptfunktionseinheit (20) und/oder der Prüf- und Hilfsfunktionseinheit (30) teilweise als Softwarekomponente und/oder als anwendungsspezifische integrierte Schaltung ausgebildet ist.

9. Steuereinheit (50) für ein Betriebsassistenzsystem (100) einer Arbeitsvorrichtung (1) und/oder Fahrassistenzsystem (100) eines Fahrzeugs (1), welches mit mindestens einem Funktionsmodul (10) nach einem der Ansprüche 1 bis 8 zur Steuerung einer Funktion eines Aggregats (2, 3, 4) der Arbeitsvorrichtung (1) bzw. des Fahrzeugs (1) ausgebildet ist.

10. Arbeitsvorrichtung (1) und/oder autonom fahrendes Fahrzeug (1), mit
- mindestens einem Aggregat (2, 3, 4) zum Betrieb der Arbeitsvorrichtung (1) und
- einer Steuereinheit (50), welche zur Steuerung des mindestens einen Aggregats (2, 3, 4) als Teil eines Betriebsassistenzsystems (100) und/oder eines Fahrassistenzsystems (100) und nach Anspruch 9 ausgebildet ist.

## Claims

1. Functional module (10) for an operating assisting system (100) of a working device (1) or for a driver assistance system (100) of a vehicle (1), for controlling a function of a unit (2, 3, 4) of the working device (1) or of the vehicle (1), comprising:
- a main functional unit (20), which is configured to generate and provide a functional parameter set (25) having at least one functional parameter (26) for controlling the function of the unit (2, 3, 4), and
- a test and auxiliary functional unit (30), which is configured
(i) to record and to test the functional parameter set (25) of the main functional unit (20), and,
(ii) as a function of a result of the testing,
- in a standard operating mode, to output the functional parameter set (25) recorded by the main functional unit (20) to control the function of the unit (2, 3, 4), and
- in an auxiliary operating mode, to generate an auxiliary parameter set (35) having at least one auxiliary parameter (36) and to output said auxiliary parameter set to control the function of the unit (2, 3, 4).

2. Functional module (10) according to Claim 1, in which the main functional unit (20)
- has a higher algorithmic and/or circuit control and functional complexity than the test and auxiliary functional unit (30) and/or
- is configured for maximum comfort and to satisfy all the requirements imposed on the function, and the test and auxiliary functional unit (30) is configured more simply and not for the same comfort and complies not with all requirements for the function but only with the most necessary ones for maintaining the safe control of the function of the unit (2, 3, 4) of the working device (1) or of the vehicle (1).

3. Functional module (10) according to any one of the preceding claims, in which the main functional unit (20) is designed according to a QM level of the ISO 26262 standard with respect to functional and/or operational safety.

4. Functional module (10) according to any one of the preceding claims, in which the test and auxiliary functional unit (30) is designed according to an ASIL-D level of the ISO 26262 standard with respect to functional and/or operational safety.

5. Functional module (10) according to any one of the preceding claims, in which the main functional unit (20) and/or the test and auxiliary functional unit (30) are configured to receive an input parameter set (23, 33, 33'), which is representative of the status and/or operation of the underlying working device (1) or of the underlying vehicle (1) and in particular of a respective unit (2, 3, 4) and is in particular identical, having at least one input parameter (24-1, 24-2; 34-1, 34-2) and to take it as a basis for the generating of the functional parameter set (25) or of the auxiliary parameter set (35).

6. Functional module (10) according to any one of the preceding claims, in which the test and auxiliary functional unit (30) is configured
- to test the plausibility of functional parameters (26) recorded by the main functional unit (20) in relation to the status and/or to the operation of the underlying working device (1), of the underlying vehicle (1) and/or of a respective unit (2, 3, 4), and
- to operate in standard operating mode where there is plausibility and
- to operate in auxiliary operating mode where there is no plausibility.

7. Functional module (10) according to any one of the preceding claims, in which the test and auxiliary functional unit (30) is configured, in the auxiliary operating mode, to set a functional parameter (26) recorded by the main functional unit (20)
- to a value of zero,
- to a status-dependent and/or operation-dependent minimum value,
- to a status-dependent and/or operation-dependent maximum value, and/or
- to a status-dependent and/or operation-dependent setpoint value to be determined with less complexity than in the main functional unit (20) and to output it as auxiliary parameter (36).

8. Functional module (10) according to any one of the preceding claims, which is wholly or partially, with respect to the main functional unit (20) and/or the test and auxiliary functional unit (30), designed as a software component and/or as an application-specific integrated circuit.

9. Control unit (50) for an operating assisting system (100) of a working device (1) and/or driver assistance system (100) of a vehicle (1), which is designed with at least one functional module (10) according to any one of Claims 1 to 8 for controlling a function of a unit (2, 3, 4) of the working device (1) or of the vehicle (1).

10. Working device (1) and/or autonomously driving vehicle (1), comprising
- at least one unit (2, 3, 4) for operating the working device (1) and
- a control unit (50), which is designed to control the at least one unit (2, 3, 4) as part of an operating assisting system (100) and/or a driver assistance system (100), and according to Claim 9.

## Revendications

1. Module fonctionnel (10) pour un système d'aide au fonctionnement (100) d'un dispositif de travail (1) ou pour un système d'aide à la conduite (100) d'un véhicule (1), pour la commande d'une fonction d'un groupe (2, 3, 4) du dispositif de travail (1) ou du véhicule (1), comprenant :
- une unité fonctionnelle principale (20), laquelle est conçue pour générer et mettre à disposition un jeu de paramètres de fonctionnement (25) comprenant au moins un paramètre de fonctionnement (26) pour la commande du fonctionnement du groupe (2, 3, 4), et
- une unité fonctionnelle auxiliaire et de contrôle (30), laquelle est conçue pour
(i) recevoir et contrôler le jeu de paramètres de fonctionnement (25) de l'unité fonctionnelle principale (20) et
(ii) en fonction d'un résultat du contrôle
- dans un mode de fonctionnement normal, délivrer le jeu de paramètres de fonctionnement (25) pour la commande du fonctionnement du groupe (2, 3, 4) enregistrés par l'unité fonctionnelle principale (20) et
- dans un mode de fonctionnement auxiliaire, délivrer un jeu de paramètres auxiliaires (35) comprenant au moins un paramètre auxiliaire (36) pour la génération et la commande du fonctionnement du groupe (2, 3, 4).

2. Module fonctionnel (10) selon la revendication 1, dans lequel l'unité fonctionnelle principale (20)
- présente une complexité de commande et de fonction algorithmique et/ou de circuit plus élevée que celle de l'unité fonctionnelle auxiliaire et de contrôle (30) et/ou
- est conçue pour un confort maximal et la satisfaction de toutes les exigences posées à la fonction et l'unité fonctionnelle auxiliaire et de contrôle (30) est plus simple et n'est pas conçue pour le même confort et ne satisfait pas toutes les exigences posées à la fonction, mais uniquement les plus nécessaires pour le maintien de la commande sûre du fonctionnement du groupe (2, 3, 4) du dispositif de travail (1) ou du véhicule (1).

3. Module fonctionnel (10) selon l'une quelconque des revendications précédentes, dans lequel l'unité fonctionnelle principale (20) est réalisée en termes de sécurité de fonctionnement et/ou d'exploitation selon un niveau QM de la norme ISO-26262.

4. Module fonctionnel (10) selon l'une quelconque des revendications précédentes, dans lequel l'unité fonctionnelle auxiliaire et de contrôle (30) est réalisée en termes de sécurité de fonctionnement et/ou d'exploitation selon un niveau ASIL-D de la norme ISO-26262.

5. Module fonctionnel (10) selon l'une quelconque des revendications précédentes, dans lequel l'unité fonctionnelle principale (20) et/ou l'unité fonctionnelle auxiliaire et de contrôle (30) sont conçues pour recevoir un jeu de paramètres d'entrée (23, 33, 33') représentatifs pour l'état et/ou le fonctionnement du dispositif de travail (1) à la base ou du véhicule (1) à la base, et en particulier d'un groupe (2, 3, 4) respectif, et en particulier identiques, comprenant au moins un paramètre d'entrée (24-1, 24-2 ; 34-1, 34-2) et de baser la génération du jeu de paramètres de fonctionnement (25) ou du jeu de paramètres auxiliaires (35) sur eux.

6. Module fonctionnel (10) selon l'une quelconque des revendications précédentes, dans lequel l'unité fonctionnelle auxiliaire et de contrôle (30) est conçue
- pour contrôler les paramètres de fonctionnement (26) enregistrés par l'unité fonctionnelle principale (20) quant à leur plausibilité concernant l'état et/ou le fonctionnement du dispositif de travail (1) à la base, du véhicule (1) à la base et/ou du groupe (2 3, 4) respectif et
- pour fonctionner en mode de fonctionnement normal en cas de plausibilité et
- en mode de fonctionnement auxiliaire en cas d'absence de plausibilité.

7. Module fonctionnel (10) selon l'une quelconque des revendications précédentes, dans lequel l'unité fonctionnelle auxiliaire et de contrôle (30) est conçue pour, dans le mode de fonctionnement auxiliaire, mettre un des paramètres de fonctionnement (26) enregistrés par l'unité fonctionnelle principale (20)
- à la valeur zéro,
- à une valeur minimale dépendant de l'état et/ou du fonctionnement,
- à une valeur maximale dépendant de l'état et/ou du fonctionnement et/ou
- à une valeur de consigne dépendant de l'état et/ou du fonctionnement devant être déterminée avec une complexité inférieure à celle dans l'unité fonctionnelle principale (20)
et à le délivrer comme paramètre auxiliaire (36).

8. Module fonctionnel (10) selon l'une quelconque des revendications précédentes, lequel est réalisé dans sa totalité ou en partie par rapport à l'unité fonctionnelle principale (20) et/ou l'unité fonctionnelle auxiliaire et de contrôle (30) en tant que composant logiciel et/ou en tant que circuit intégré spécifique à l'application.

9. Unité de commande (50) pour un système d'aide au fonctionnement (100) d'un dispositif de travail (1) et/ou d'un système d'aide à la conduite (100) d'un véhicule (1), laquelle est réalisée comprenant au moins un module fonctionnel (10) selon l'une quelconque des revendications 1 à 8 pour la commande d'une fonction d'un groupe (2, 3 4) du dispositif de travail (1) ou du véhicule (1).

10. Dispositif de travail (1) et/ou véhicule (1) à conduite autonome, comprenant
- au moins un groupe (2, 3, 4) pour faire fonctionner le dispositif de travail (1) et
- une unité de commande (50), laquelle est réalisée pour la commande de l'au moins un groupe (2, 3, 4) en tant que partie d'un système d'aide au fonctionnement (100) et/ou d'un système d'aide à la conduite (100) et selon la revendication 9.
